# EUROPEAN PATENT APPLICATION

(11) **EP 1 780 909 A1**
(43) Date of publication of application: **02.05.2007**
(21) Application number: 04771470.4
(22) Date of filing: 10.08.2004
(51) Int. Cl.: H04B 7/26, G01S 1/54, G01S 3/14

(54) **BASE STATION AND MOBILE UNIT OF MOBILE COMMUNICATION SYSTEM, AND AZIMUTH DETERMINING METHOD**

(71) Applicant: MITSUBISHI DENKI KABUSHIKI KAISHA, Chiyoda-ku, Tokyo 100-8310 (JP)
(72) Inventor: KANEKO, Koji c/o Mitsubishi Denki Kabushiki Kaisha, Chiyoda-ku, Tokyo 100-8310 (JP); SUZUKI, Kuniyuki Mitsubishi Denki Kabushiki Kaisha, Tokyo 100-8310 (JP)
(74) Representative: Domenego, Bertrand
(86) International application number: PCT/JP2004/011483
(87) International publication number: WO 2006/016402

(57) **Abstract**

It is an object of the present invention to suppress an increase in direction detection error even under an environment of multipath propagation. It is another object of the present invention to maintain predetermined measurement accuracy even when a mobile station is not within line-of-sight of a base station.

In a base station of a mobile communication system in which predetermined communication is performed between the base station and a mobile station, the base station includes a directivity control unit 12 that controls transmission of a first antenna beam, which rotates clockwise, encoded and identified by a first code and a second antenna beam, which rotates counter clockwise, encoded and identified by a second code different from the first code.

## Description

### TECHNICAL FIELD

The present invention generally relates to a base station and a mobile station in a mobile communication system and a direction detecting method. The present invention specifically relates to a base station and a mobile station in a mobile communication system having a direction detecting function and a direction detecting method suitable for the mobile communication system.

### BACKGROUND ART

In a mobile communication system, in terms of system management or realization of various services, it is an important technology to learn a position of a mobile station. For example, in terms of system management, this is an important technology for a grasp of a communication volume, optimization of a cell corresponding to the communication volume, and the like. In terms of realization of various services, this is an important technology in a location service for providing portable terminal users with road guidance and neighborhood information, a monitoring service for monitoring behaviors of, for example, demented aged people.

On the other hand, recently, the number of portable terminals owned by users shows a rapid increase. The number of portable terminals used in an identical cell rapidly increases and processing loads on a base station side increases. Under such recent circumstances, if a function for estimating the direction of the base station and a distance to the base station is mounted on a mobile station side, it is possible to substantially reduce processing loads due to various types of processing performed by the base station. Usefulness of the function is expected.

As the conventional technology for detection of a position of a mobile station, a method of measuring an arrival time of a transmission signal transmitted between the mobile station and a base station and detecting a position of the mobile station based on the arrival time is generally used. For example, a method of comparing an arrival time of one rotating beam with known timing obtained in transmission from a fixed antenna and estimating a direction is disclosed (e.g., Patent Document 1). In particular, in a CDMA system, it is possible to estimate a distance from a base station according to a delay time of a delay profile. Thus, if it is possible to decide the direction of a mobile station, the base station alone can determine the position of the mobile station.

Further, a method of arranging two directional antennas having coverages of the same angle, which are set in the same direction, synchronizing these directional antennas and rotating the directional antennas while keeping a fixed angle between the antennas, and measuring a difference of arrival times of reception signals in the two directional antennas to calculate the direction of a mobile station is disclosed (e.g., Patent Document 2).

Concerning beam formation (directivity composition) of an antenna, there is a technical literature in which application of an adaptive array antenna to a mobile communication system is examined (e.g., Non-Patent Literature 1). In this literature, a method of electronically realizing the beam formation of the antenna using an adaptive array antenna is disclosed.

Patent Document 1: Published Japanese Translation of a PCT Patent Application No. 2000-512101
Patent Document 2: Japanese Patent Application Laid-Open No. H9-133749
Non-Patent Literature 1: The Institute of Electronics, Information and Communication Engineers Transaction "Application of an Adaptive Array Antenna to Mobile Communication", Vol. J84-B, No. 4, pp. 666-679

### DISCLOSURE OF INVENTION

### PROBLEM TO BE SOLVED BY THE INVENTION

In the conventional technology disclosed in the Patent Document 1, the direction of the mobile station is determined by measuring an arrival time of one rotating beam and comparing the arrival time with a known time. However, in this system, in the case of multipath propagation in which a reception signal from the rotating beam includes a reflection wave and the like, there is a problem in that error in measuring the direction of a mobile station increases. If it is possible to use a beam antenna with high directivity, it is possible to improve accuracy in measuring the direction of a mobile station. However, in an adaptive array antenna and the like that electronically change directivity, there is a problem in that, when the number of antenna elements is small, it is impossible to obtain sufficient directivity and satisfactory direction measurement accuracy is not achieved.

Further, in the conventional technology disclosed in the Patent Document 1, a propagation time is calculated based on the comparison between an arrival time of one rotating beam and a known time. Thus, in the case of multipath propagation, it is not possible to accurately calculate the arrival time of the rotating beam and, as a result, error in measuring the direction of a mobile station increases.

On the other hand, in the conventional technology disclosed in the Patent Document 2, since physically different two antenna systems spaced apart from each other are used, characteristics of two RF systems including the respective antenna systems have to be adjusted to identical characteristics in a strict sense. Thus, conversely, there is a problem in that a difference between the characteristics of the two RF systems directly affects measurement accuracy. Since setting positions of the two antenna systems are different, propagation environments of the antenna systems are different. There is a problem in that measurement accuracy is substantially deteriorated, in particular, when a mobile station is not within line-of-sight of the base station.

The present invention has been devised in view of the circumstances and it is an object of the present invention to provide a base station and a mobile station of a mobile communication system and a direction detecting method that are capable of suppressing an increase in direction detection error even under an environment of multipath propagation. It is another object of the present invention to provide a base station and a mobile station of a mobile communication system and a direction detecting method that are capable of maintaining predetermined detection accuracy even when the mobile station is not within line-of-sight of the base station.

### MEANS FOR SOLVING PROBLEM

To overcome the problems and achieve the object mentioned above, according to the present invention, a base station that communicates with a mobile station in a mobile communication system, includes a directivity control unit that controls transmission of a first antenna beam encoded to be identified by a first code, and a second antenna beam encoded to be identified by a second code different from the first code.

According to the present invention, the directivity control unit of the base station transmits the first antenna beam encoded to be identified by the first code and the second antenna beam encoded to be identified by the second code different from the first code to the mobile station. The mobile station detects the direction of a base station based on an arrival time difference between the two antenna beams.

### EFFECT OF THE INVENTION

The direction detecting apparatus according to the present invention is capable of, in the mobile station, detecting the direction of a base station based on an arrival time difference between the two antenna beams transmitted from the base station. Thus, it is possible to suppress the multipath effect and phasing effect.

### BRIEF DESCRIPTION OF DRAWINGS

[Fig. 1] Fig. 1 is a diagram for explaining an operation concept according to a first embodiment of the present invention.
[Fig. 2] Fig. 2 is a diagram of reception characteristics according to the first embodiment.
[Fig. 3] Fig. 3 is a schematic of signal waveforms of reception signals when, for example, a mobile station is located due north of a base station.
[Fig. 4] Fig. 4 is a schematic of signal waveforms of reception signals when, for example, the mobile station is located due west of the base station.
[Fig. 5] Fig. 5 is a block diagram of a functional structure of a base station according to the present invention.
[Fig. 6] Fig. 6 is a block diagram of a functional structure of a mobile station according to the present invention.
[Fig. 7] Fig. 7 is a flowchart of the operation of a direction detecting unit 25 shown in Fig. 6.
[Fig. 8] Fig. 8 is a diagram for explaining an operation concept according to a second embodiment of the present invention.
[Fig. 9] Fig. 9 is a diagram of reception characteristics according to the second embodiment.
[Fig. 10] Fig. 10 is a schematic of signal waveforms of reception signals when, for example, a mobile station is located due north of a base station.
[Fig. 11] Fig. 11 is a schematic of signal waveforms of reception signals when, for example, the mobile station is located due south of the base station.
[Fig. 12] Fig. 12 is a diagram of reception characteristics (a range of ±60 degrees and the same moving speed) according to a third embodiment of the present invention.
[Fig. 13] Fig. 13 is a diagram of reception characteristics (a range of ±60 degrees and different moving speeds) according to the third embodiment.
[Fig. 14] Fig. 14 is a diagram of reception characteristics according to a fourth embodiment of the present invention.
[Fig. 15] Fig. 15 is a diagram for explaining functions according to a fifth embodiment of the present invention.
[Fig. 16] Fig. 16 is a diagram for explaining a relation between a direction and a reception level in a mobile station 52 located as shown in Fig. 15.
[Fig. 17] Fig. 17 is diagram for explaining functions according to a sixth embodiment of the present invention.
[Fig. 18] Fig. 18 is a diagram for explaining a relation between a direction and a reception level in the mobile station 52 located as shown in Fig. 17.
[Fig. 19] Fig. 19 is diagram for explaining functions according to a seventh embodiment of the present invention.

### EXPLANATIONS OF LETTERS OR NUMERALS

- 10a, 10b, 10c, 10d, 21: Transmission and reception antenna
- 11a, 11b, 11c, 11d: High-frequency circuit unit
- 12: Antenna-directivity control unit
- 13: Code generating unit
- 15: Modulation processing unit
- 16: Demodulation processing unit
- 17: Control unit
- 18: Directivity-control-pattern storing unit
- 22: High-frequency unit
- 23a: Code A correlator
- 23b: Code B correlator
- 24a, 24b: Delay-profile storing unit
- 25: Direction detecting unit
- 51, 54: Base station
- 52: Mobile station
- 53: Obstacle

### BEST MODE(S) FOR CARRYING OUT THE INVENTION

Embodiments of a base station and a mobile station of a mobile communication system and a direction detecting method according to the present invention are explained in detail below with reference to the drawings. The present invention is not limited to the embodiments.

### First embodiment

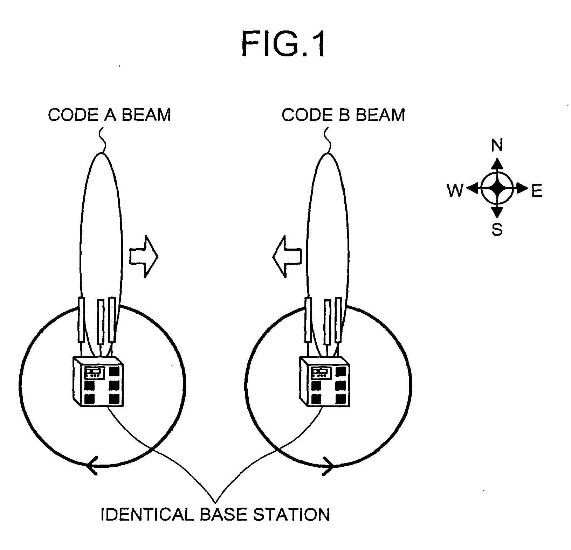

Fig. 1 is a diagram for explaining an operation concept according to a first embodiment of the present invention. Among mobile communication systems, for example, in a Code Division Multiple Access (CDMA) communication system, multiplexed transmission is realized by using a plurality of identification codes. In a conceptual diagram shown in the figure, a code A beam (on the left side in the figure) encoded by a code A as a first beam and a code B beam (on the right side in the figure) encoded by a code B as a second beam are transmitted from the same base station. These beams are rotating in different directions at the same speed. The first beam is rotating clockwise and the second beam is rotating counterclockwise. The respective beams start from an identical direction (e.g., due north), rotate in opposite directions at the same speed, and return to the original start position. Thereafter, these operations are repeated for a predetermined period.

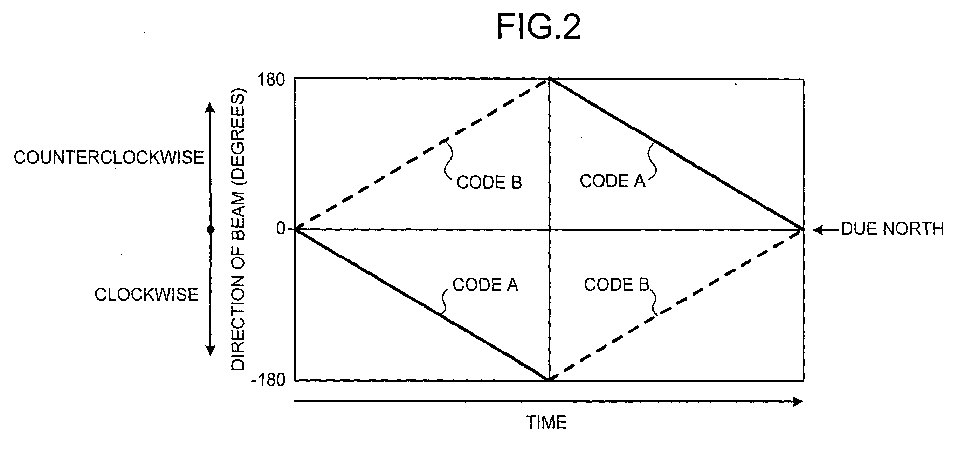

Fig. 2 is a diagram of reception characteristics according to the first embodiment, and more specifically, depicts peak positions of reception signals in a mobile station that has received transmission beams from a base station. In the figure, an abscissa indicates time when a beam is received and an ordinate indicates a direction (degrees) of the beam with a counterclockwise direction set as a positive direction. A solid line waveform indicates a peak position of a reception signal based on the code A beam. A wavy line waveform indicates a peak position of a reception signal based on the code B beam. In the example shown in the figure, the respective beams simultaneously start from due north of the base station.

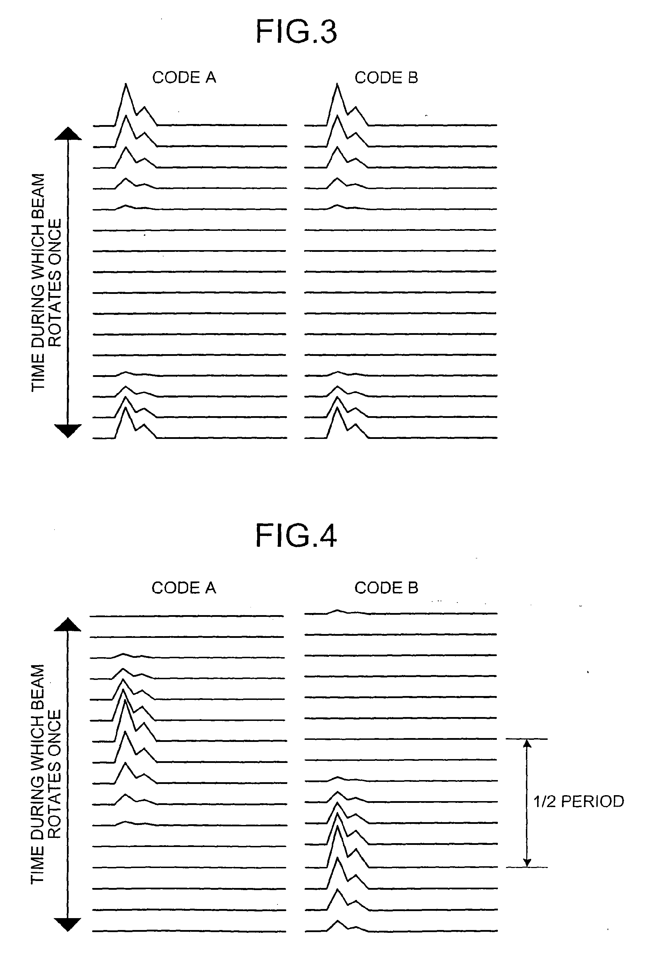

Fig. 3 is a schematic of signal waveforms of reception signals when, for example, the mobile station is located due north of the base station. When the mobile station located due north of the base station receives two beams, respective peak positions of a reception signal based on the code A and a reception signal based on the code B beam appear at substantially identical time (start positions or end positions of the respective beams). Positions where peak characteristics of such signals appear are located in a direction indicated by an intersection of the solid line waveform and the wavy line waveform, that is, due north. Accordingly, it can be estimated that the base station is located due north of the mobile station.

On the other hand, Fig. 4 is a schematic of signal waveforms of reception signals when, for example, the mobile station is located due west of the base station. As shown in the figure, when the mobile station is located due west, peaks of the code A and the code B appear in positions shifted by a half of the time taken for the beams to rotate once. Thus, it is possible to estimate the direction of the base station viewed from the mobile station by measuring a time difference between these two beams.

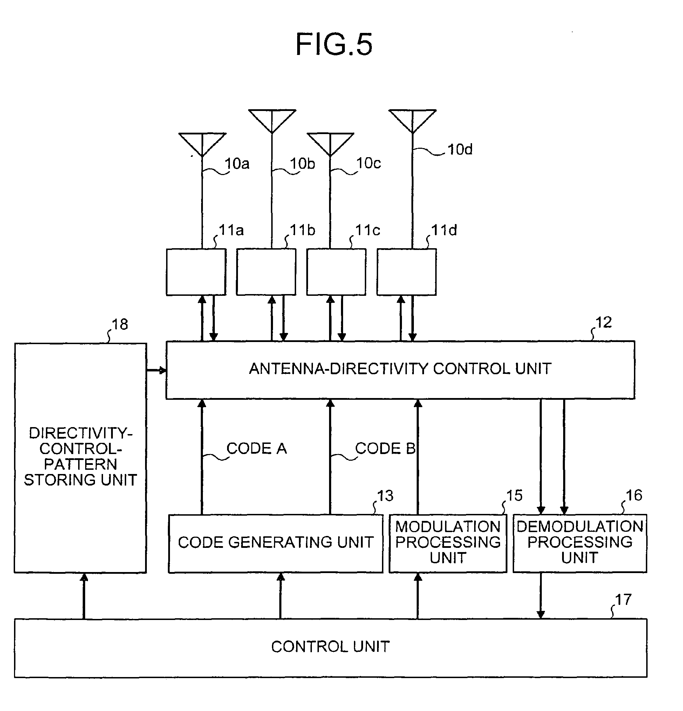

Fig. 5 is a block diagram of a functional structure of the base station according to the present invention. The base station shown in the figure includes an antenna system that radiates a transmission signal to the space or transmits a reception signal to a signal processing system and a signal processing system that generates the transmission signal or performs predetermined signal processing based on the reception signal. The antenna system includes transmission and reception antennas 10a to 10d and high-frequency circuit units 11a to 11d that are connected to the transmission and reception antennas 10a to 10d, respectively, and include duplexers, amplifiers, and frequency converting units. The number of transmission and reception antennas and the number of high-frequency circuit units are examples only and are not limited to four shown in the figure. These numbers are comprehensively determined taking into account frequencies of transmission and reception, an antenna beam width, a mounting space, and the like.

On the other hand, the signal processing system includes an antenna-directivity control unit 12 that controls a phase and an amplitude of a signal supplied to the transmission and reception antennas 10a to 10d, a code generating unit 13 that generates identification codes (the code A and the code B) for identifying the respective first and second antenna beams, a modulation processing unit 15 that performs modulation processing for a communication channel other than beam control, a demodulation processing unit 16 that performs demodulation processing for a reception signal, a control unit 17 that executes control of the entire base station, and a directivity-control-pattern storing unit 18 that stores beam control information and outputs control information for the antenna-directivity control unit 12. In the figure, a beam width, a beam period, and the like of a directivity pattern are determined according to the control by the antenna-directivity control unit 12. It is possible to use codes peculiar to the base station as the identification codes supplied to the first and the second antenna beams.

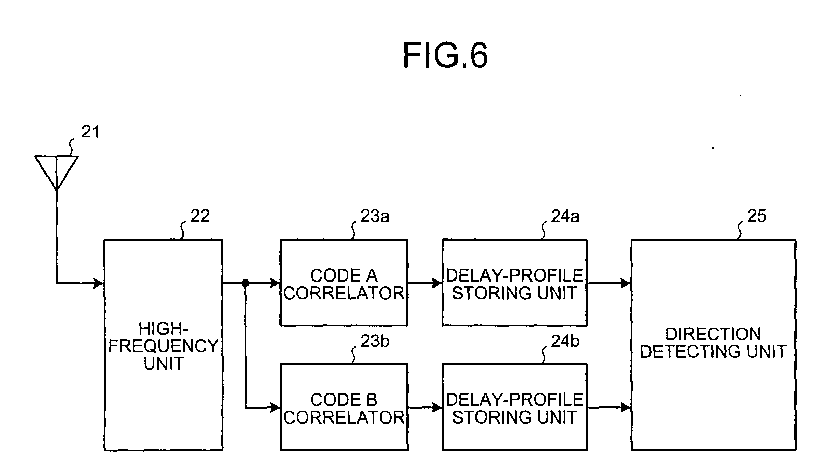

Fig. 6 is a block diagram of a functional structure of the mobile station according to the present invention. As with the base station, the mobile station shown in the figure includes an antenna system and a signal processing system. The antenna system includes a transmission and reception antenna 21 and a high-frequency unit 22 that is connected to the transmission and reception antenna 21 and includes an amplifier and a frequency converting unit. On the other hand, the signal processing unit includes a code A correlator 23a and a code B correlator 23b that receive modulated signals modulated according to the predetermined identification codes (the code A and the code B) and correlate the respective identification codes with a base band signal down-converted in the high-frequency unit 22, delay-profile storing units 24a and 24b that are connected to the code A correlator 23a and the code B correlator 23b, respectively, and create delay profiles indicating a relation among a delay time, a reception level, a propagation distance, and the like, and a direction detecting unit 25 that estimates the direction of the base station of a positioning object based on time difference information of peak values obtained by comparison of the respective delay profiles. In the delay-profile storing unit 24a and 24b, the delay profiles created by the code A correlator 23a and the code B correlator 23b are recorded for each elapsed time. The signal processing system includes the two correlators (the code A correlator 23a and the code B correlator 23b) that correspond to the identification codes (the code A and the code B) used on the base station side and correlate these identification codes with a base band signal. However, it is also possible that only a single correlator is provided and the single correlator performs correlation processing with the identification codes.

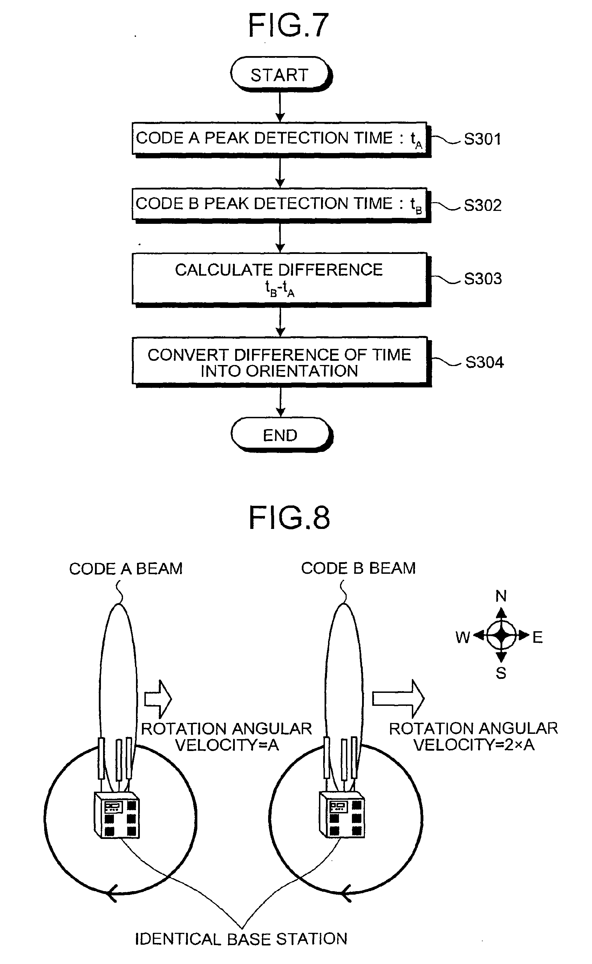

Fig. 7 is a flowchart of the operation of the direction detecting unit 25 shown in Fig. 6. In Fig. 7, when direction detecting processing is started, peak time (t_{A}) based on the code A and peak time (t_{B}) based on the code B are detected (steps S301 and S302). A difference (difference time) between the peak times is calculated (step S303). The difference time is converted into direction information (step S304). The direction of the base station as a positioning object is estimated according to execution of the series of processing.

In the process from steps S301 to S303 in Fig. 7, it is possible to increase direction detecting accuracy by comparing points with high correlation values in delay profiles corresponding to the respective beams rather than simply comparing peak values.

As described above, in this embodiment, the base station rotates two beams, which can be identified in the mobile station, clockwise and counterclockwise, respectively, and transmits the beams. The mobile station measures arrival times of the two beams. Thus, it is possible to detect the direction of the base station based on an arrival time difference between the two beams measured every time the beams rotate once. When a direction detecting area is limited to a range of 180 degrees, it is possible to detect the direction of the base station only from the arrival time difference between the two beams without using known timing and known time.

As described above, upon calculating an arrival time difference between the two beams, direction detection is performed by comparing points with high correlation values in delay profiles obtained for the respective beams rather than simply comparing peak values. This make it possible to suppress deterioration in direction detecting accuracy even when a beam width is formed relatively wide as in an adaptive array antenna with a small number of elements or the like or even under an environment in which multipath often occurs.

In this embodiment, it is possible to perform electronic antenna beam control using an adaptive array antenna or the like. Thus, compared with mechanical antenna beam control, it is possible to set a rotation angular velocity of antenna beams to an arbitrary value to ensure sufficient measurement time necessary for highly accurate measurement of a reception quality (e.g., a signal to interference ratio) at an arbitrary angle. It is also possible to set the time taken for the antenna beams to rotate once or travel back and forth sufficiently longer than a phasing period. In this case, there is also an effect that it is possible to reduce a measurement error due to phasing effect.

In addition to the above, it is possible to take a discrete value for the rotation of the antenna beams, for example, once every time the antenna beams rotate, according to electronic antenna beam control. Thus, it is possible to measure a reception quality with arbitrary accuracy at respective angles. It is possible to further improve the direction detecting accuracy by using this reception quality.

Moreover, it is possible to easily distinguish a beam signal from one base station from beam signals from other base stations by using a base station identification code (CDMA), a frequency combination (OFDM), a color code transmitted at specific timing (TDMA), and the like in combination with the first beam and the second beam. There is an effect that it is easy to decide a base station.

### Second Embodiment

Fig. 8 is a diagram for explaining an operation concept according to a second embodiment of the present invention. In the first embodiment, the direction of the base station, viewed from the mobile station, is detected based on the first antenna beam, which rotates clockwise, encoded to be identified by the first code (the first identification code) and the second antenna beam, which rotates counterclockwise, encoded to be identified by the second code (the second identification code) different from the first code. The second embodiment is characterized in that two beams having different rotation angular velocities are used. It is possible to realize the processes of first and second code generation, antenna directivity control for transmission and reception using constitutions identical with or equivalent to those in the first embodiment. Therefore, explanations of the processes are omitted.

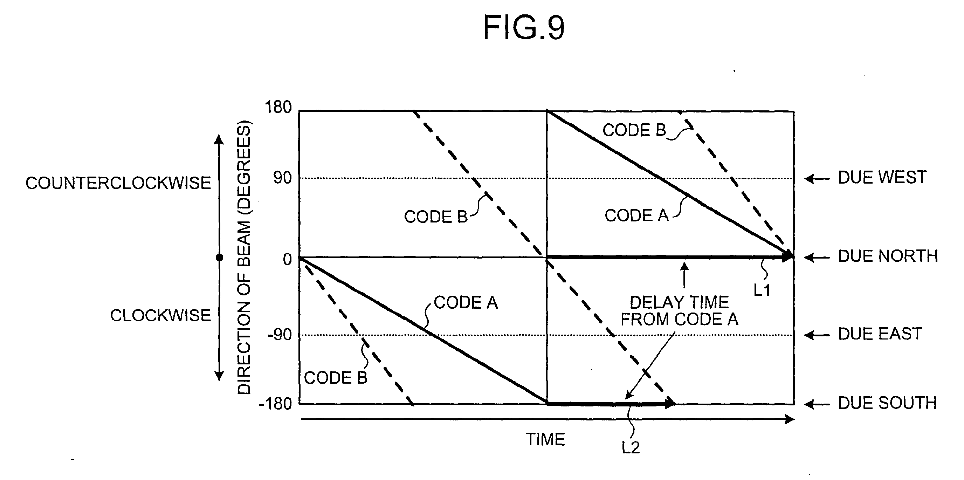

Fig. 9 is a diagram of reception characteristics according to the second embodiment, and more specifically, depicts peak positions of reception signals in a mobile station that receives a transmission beam from a base station. In the figure, an abscissa indicates time when a beam is received and an ordinate indicates a direction (degrees) of the beam with a counterclockwise direction set as a positive direction. A solid line waveform indicates a peak position of a reception signal based on a code A beam. A wavy line waveform indicates a peak position of a reception signal based on a code B beam. In the example shown in the figure, the respective beams simultaneously start from due north of the base station.

As shown in Fig. 9, an arrival time difference of a code B from a code A with a low rotation angular velocity is uniquely determined according to the direction of the base station viewed from the mobile station. Thus, it is possible to detect the direction of the base station by measuring this arrival time difference in the mobile station.

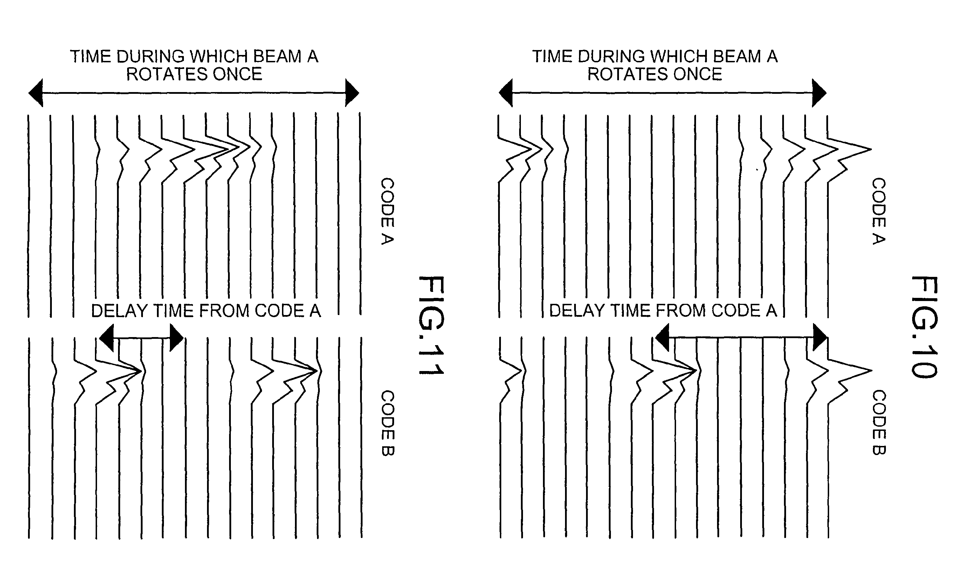

Fig. 10 is a schematic of signal waveforms of reception signals when, for example, a mobile station is located due north of a base station. Fig. 11 is a schematic of signal waveforms of reception signals when, for example, a mobile station is located due south of a base station. When the mobile station located due north of the base station receives two beams, a peak position of a reception signal based on the code B beam has a predetermined delay time shown in Fig. 10 (a delay time L1 shown on a peak characteristic in Fig. 9) from a peak position of a reception signal based on the code A. On the other hand, when the mobile station located due south of the base station receives two beams, a peak position of a reception signal based on the code B beam has a delay time (a delay time L2 shown on the peak characteristic in Fig. 9), which is shorter than the predetermined delay time shown in Fig. 10, from the peak position of the reception signal based on the code A. It is possible to uniquely estimate the direction of the base station, viewed from the mobile station, by measuring an arrival time difference in this way.

As described above, in this embodiment, the base station transmits two beams with different rotation angular velocities and the mobile station measures arrival times of the two beams. Thus, it is possible to detect the direction of the base station based on an arrival time difference between the two beams measured every time the beams rotate once. An effect the same as that in the first embodiment is obtained. There is also an effect that it is possible to detect the direction of the base station from all directions of 360 degrees by setting a rotation period ratio of the two beams known without learning a rotation period of beams, known timing, and known time in advance.

### Third Embodiment

In the first and the second embodiment, beam control is performed for all the directions using rotating beams. A third embodiment of the present invention is characterized in that beam control is performed in a limited range using round-trip beams. It is possible to realize the processes of first and second code generation, antenna directivity control for transmission and reception using constitutions identical with or equivalent to those in the first and the second embodiments. Therefore, explanations of the processes are omitted.

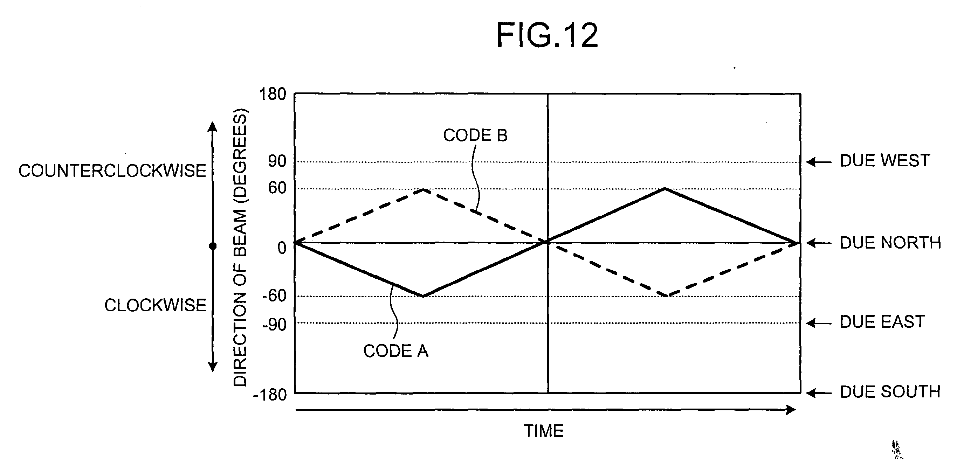

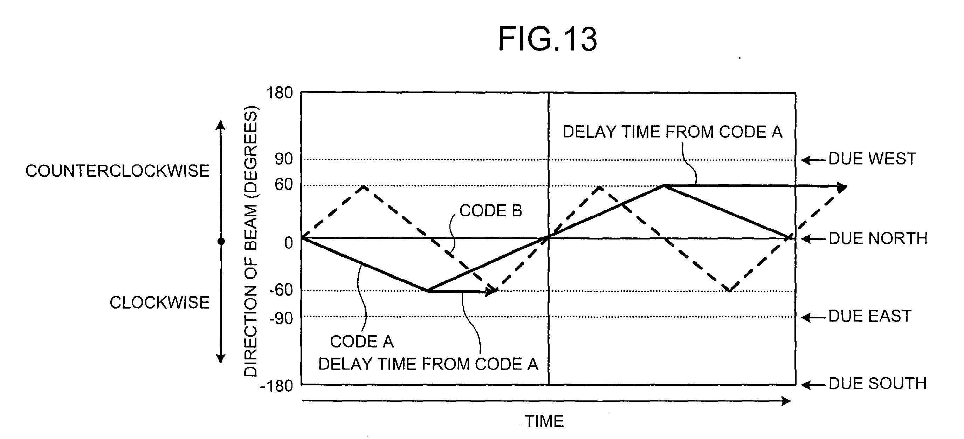

Figs. 12 and 13 are diagrams of reception characteristics according to the third embodiment. More specifically, Fig. 12 depicts peak positions of reception signals in the mobile station that receives transmission beams moving at the same speed in opposite directions in a range of ± 60 degrees are shown. Fig. 13 depicts peak positions of reception signals in the mobile station that receives the code A beam and the code B beam with a moving speed twice as high as that of the code A beam moving in a range of ± 60 degrees.

Peak characteristics of the reception signals shown in Figs. 12 and 13 are equivalent to the peak characteristics shown in Figs. 2 and 9 except that the beam control is performed in the limited range. As in the first and the second embodiments, it is possible to detect the direction of the base station based on an arrival time difference between two beams.

As described above, in this embodiment, even when a control range of beams is limited, it is possible to detect the direction of the base station based on an arrival time difference between two beams. There is an effect same as those in the first and the second embodiments.

### Fourth Embodiment

In the first to the third embodiments, radio waves are always radiated from the two beams. A fourth embodiment of the present invention is characterized in that a second beam is not transmitted while a first beam is rotated once clockwise and, right after that, the first beam is not transmitted while the second beam is rotated once counterclockwise. It is possible to realize the processes of first and second code generation, antenna directivity control for transmission and reception using constitutions identical with or equivalent to those in the first to the third embodiments. Therefore, explanations of the processes are omitted.

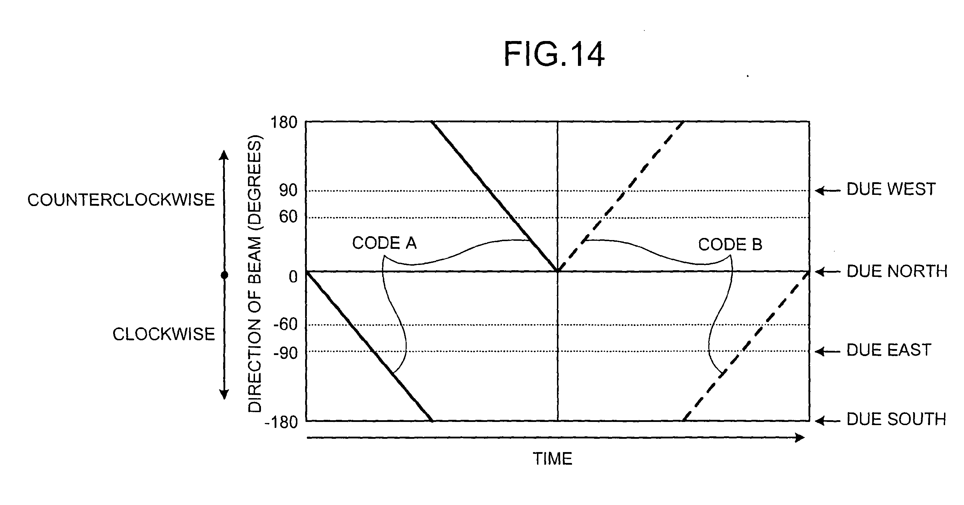

Fig. 14 is a diagram of reception characteristics according to a fourth embodiment of the present invention, and more specifically, depicts peak positions of reception signals in a mobile station that receives transmission beams rotating at the same speed in opposite directions as described above.

Peak characteristics of the reception signals shown in Fig. 14 are equivalent to the peak characteristics shown in Fig. 2 except that a code B beam indicated by a wavy line delays by one period from a code A beam. As in the first embodiment and the like, it is possible to detect the direction of the base station based on an arrival time difference between the two beams.

As described above, in this embodiment, even when the total number of beams simultaneously transmitted in the base station is limited to one, it is possible to detect the direction of the base station based on an arrival time difference between two beams. In addition to the effect of the first embodiment and the like, there is an effect that it is possible to reduce an influence on a radio line capacity. There is also an effect that it is possible to reduce power consumption of the base station and the mobile station. There is also an effect that it is possible to restrict an increase in a size on the mobile station side according to this embodiment.

### Fifth Embodiment

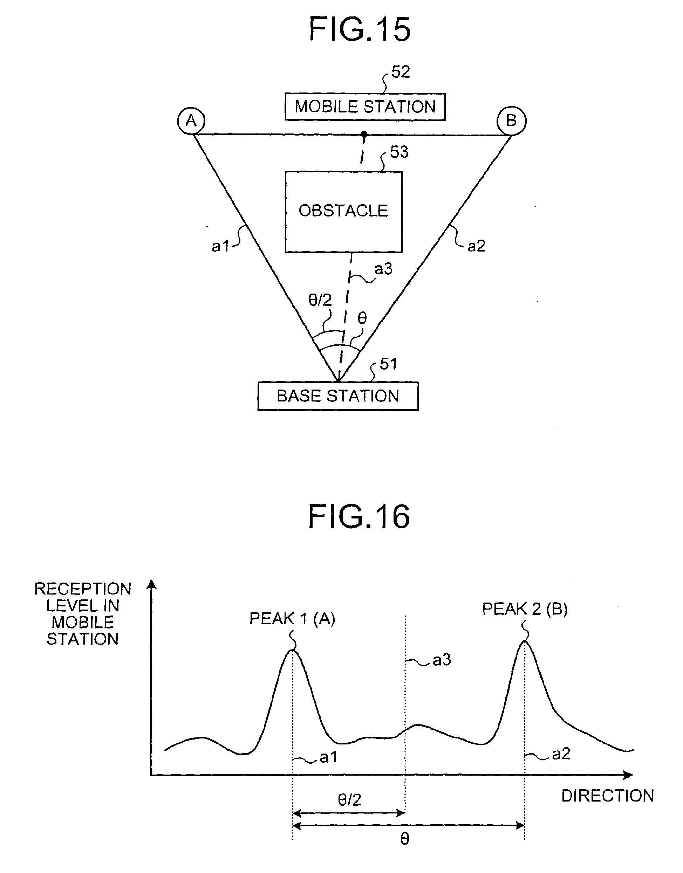

Fig. 15 is a diagram for explaining functions according to a fifth embodiment of the present invention, and more specifically, illustrating a positional relation between a base station and a mobile station located between obstacles. Structures of the base station and the mobile station, the processes of first and second code generation, antenna directivity control for transmission and reception are identical with or equivalent to those in the first to the fourth embodiments. Therefore, explanations of the structures and the processes are omitted.

In the first to the fourth embodiments, the direction of the base station obtained from a time difference between two beams is detected based on peak positions (peak directions) of reception levels of the two beams or a time difference between points where correlation of delay profiles of the two beams is high. On the other hand, when there is an obstacle between a mobile station and a base station, a peak position of reception levels of beams is not always the direction of the base station. For example, as shown in Fig. 15, when there is an obstacle 53 between a mobile station 52 and a base station 51, a reception level in the mobile station is large when beams from the base station 51 are in an imaginary direction a1 (the base station to an imaginary position A) and an imaginary direction a2 (the base station to an imaginary position B).

Fig. 16 is a diagram for explaining a relation between a direction and a reception level in the mobile station 52 located as shown in Fig. 15. At the reception level shown in an example in the figure, two directions (the imaginary directions a1 and a2) are detected. When two directions are detected in this way, considering that the mobile station 52 is located in a substantially middle point between the imaginary position A and the imaginary position B, a line connecting this middle point and the base station (a true direction a3), that is, a substantially middle direction (an angle = θ/2) between the imaginary direction a1 and the imaginary direction a2 is assumed as a true direction (direction of the base station). Consequently, it is possible to decide the direction of the base station.

As described above, in this embodiment, it is assumed that a mobile station is located at a substantially middle point between positions where reception levels of two beams reaches a peak. Thus, even when a beam from a base station does not exist in a line-of-sight range, it is possible to improve accuracy in estimating the direction of the base station.

In the above explanation, the direction of the base station is estimated from two peak positions of a reception level. However, when there are three or more peak positions in a reception level, it is also possible to estimate the direction of the base station. For example, two peaks positions with larger levels only have to be selected out of the three or more peak positions to perform the same processing.

### Sixth Embodiment

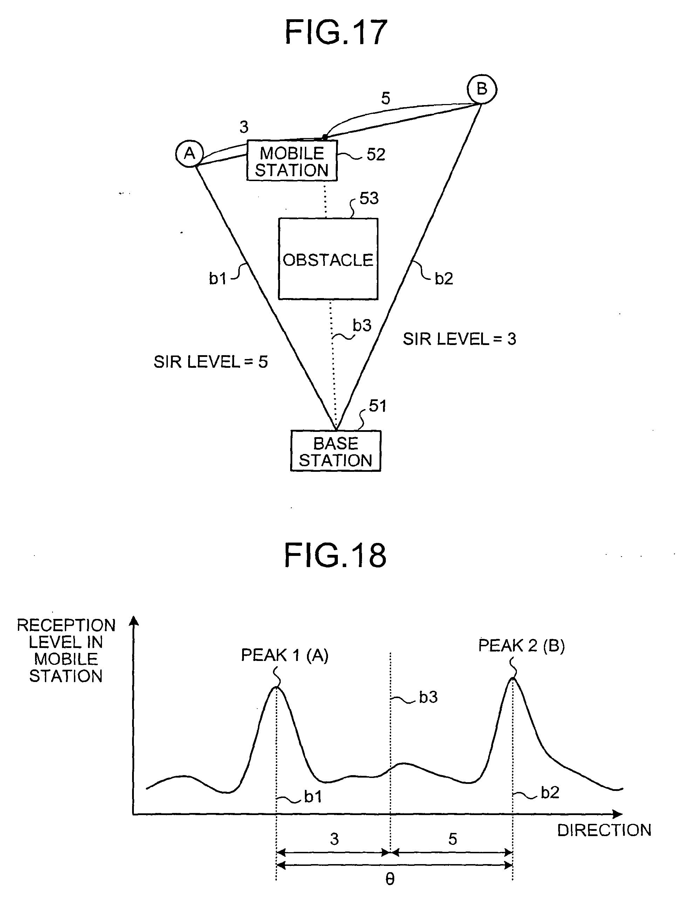

Fig. 17 is a diagram for explaining functions according to a sixth embodiment of the present invention. More specifically, a positional relation between the base station 51 and the mobile station 52 with an obstacle placed between the stations is shown. Fig. 18 is a diagram for explaining a relation between a direction and a reception level in the mobile station 52 located as shown in Fig. 17. Structures of the base station and the mobile station, the processes of first and second code generation, antenna directivity control for transmission and reception are identical with or equivalent to those in the first to the fifth embodiments. Therefore, explanations of the structures and the processes are omitted.

In the fifth embodiment, a line connecting a middle point between positions based on two estimated directions and the base station 51 is estimated as the direction of the base station viewed from the mobile station 52. However, in the sixth embodiment, the imaginary positions A and B of the mobile station 52 is assumed taking into account a distance calculated from a round-trip propagation time. A position of the mobile station 52 is estimated using a signal to interference ratio (SIR) of reception signals in the mobile station 52 and the direction of the base station is estimated based on the position of the mobile station 52 estimated. It is possible to calculate the imaginary positions A and B from both a distance calculated from a round-trip delay time of communication between the mobile station 52 and the base station 51 and a direction estimated from an arrival time difference between two beams transmitted from the base station 51.

In an example shown in Figs. 17 and 18, the imaginary position A (an SIR level=5) present on the imaginary direction b1 and the imaginary position B (an SIR level = 3) present on the imaginary direction b2 are shown. It is estimated that the mobile station 52 is located in a position obtained by internally dividing a distance between the imaginary position A and the imaginary position B at an inverse ratio of the respective SIR levels (1/5:1/3=3:5). A line connecting this estimated position and the base station 51 (a true direction b3) is estimated as the direction of the base station and the direction of the base station is decided.

As described above, in this embodiment, a position of a mobile station is estimated based on distance information calculated from a signal to interference ratio and a round-trip delay time. Thus, even when a beam from a base station does not exist in a line-of-sight range, it is possible to improve accuracy in estimating the direction of the base station.

In this embodiment, in estimating a true position of the mobile station, weighting process is performed using an inverse ratio of a signal to interference ratio. However, reception signal quality information is not limited to the signal to interference ratio. For example, it is also possible to use reception signal quality information such as a received signal strength indicator (RSSI) other than the signal to interference ratio.

### Seventh Embodiment

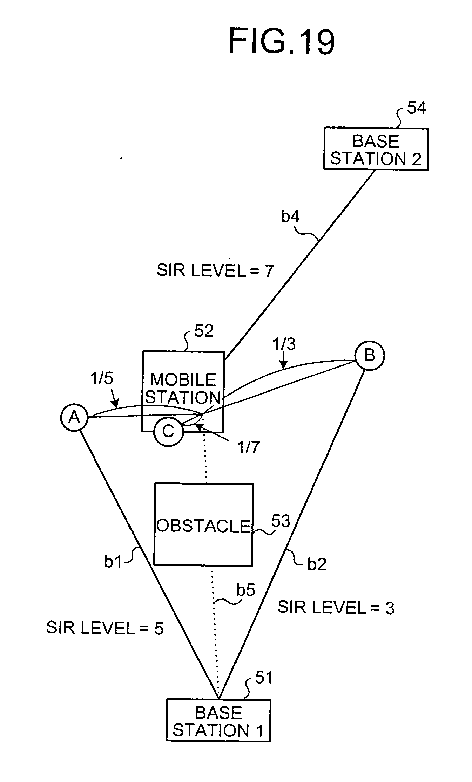

Fig. 19 is a diagram for explaining functions according to a seventh embodiment of the present invention. More specifically, a positional relation between the mobile station 52 and a base station 2 (54) in line-of-sight is shown in addition to the conditions according to the sixth embodiment. Structures of the base station and the mobile station, the processes of first and second code generation, antenna directivity control for transmission and reception are identical with or equivalent to those in the first to the sixth embodiments. Therefore, explanations of the structures and the processes are omitted.

In the sixth embodiment, a position of a mobile station is estimated based on distance information calculated from a signal to interference ratio and a round-trip delay time. However, in the seventh embodiment, a position of a mobile station is further estimated based on reception signal quality information such as direction information calculated from reception signals of other base stations, a signal to interference ratio, and reception signal intensity. It is possible to calculate the imaginary positions A and B from both a distance calculated from a round-trip delay time of communication between the mobile station and a base station 1 and a direction estimated from an arrival time difference between two beams transmitted from the base station 1. It is possible to calculate an imaginary position C from both a distance calculated from a round-trip propagation time (a delay time) of communication between the mobile station and the base station 2 (54) and a direction estimated from an arrival time difference between two beams transmitted from the base station 2 (54).

In an example shown in Fig. 19, in addition to the imaginary position A (an SIR level = 5) present in the imaginary direction b1 and the imaginary position B (an SIR level = 3) present in the imaginary direction b2, the imaginary position C (an SIR level = 7) present in an imaginary direction b4 estimated by the base station 2 (54) is shown. It is estimated that the mobile station 52 is located in a position where distances between an estimated position of the mobile station 52 and the respective imaginary positions (the imaginary position A, the imaginary position B, and the imaginary position C) are at an inverse ratio of the respective SIR levels (1/5:1/3:1/7). A line connecting this estimated position and the base station 1 (51) (a true direction b5) is estimated as the direction of the base station and the direction of the base station is decided.

As described above, according to the embodiment, a position of a mobile station is estimated based on direction information obtained from reception signals of other base stations and reception signal quality information. Thus, a beam from a base station does not exist in a line-of-sight range, it is possible to improve accuracy of estimation of a base station position.

### INDUSTRIAL APPLICABILITY

As described above, the present invention provides a base station, a mobile station, or a direction detecting (estimating) method useful for estimating the direction and position of a base station in a mobile communication system.

## Claims

1. A base station of a mobile communication system in which predetermined communication is performed between the base station and a mobile station, the base station of a mobile communication system comprising a directivity control unit that controls transmission of a first antenna beam encoded and identified by a first code and a second antenna beam encoded and identified by a second code different from the first code, respectively.

2. The base station of a mobile communication system according to claim 1, wherein the directivity control unit controls the first antenna beam to rotate clockwise and controls the second antenna beam to rotate counterclockwise.

3. The base station of a mobile communication system according to claim 2, wherein a rotation angular velocity of the first antenna beam and a rotation angular velocity of the second antenna beam are substantially identical.

4. The base station of a mobile communication system according to claim 1, wherein the directivity control unit controls the first antenna beam and the second antenna beam to rotate at different speeds.

5. The base station of a mobile communication system according to claim 4, wherein the directivity control unit controls the first and the second antenna beams to substantially fix a speed ratio of the antennas.

6. The base station of a mobile communication system according to claim 2, wherein the directivity control unit limits a transmission range of the first and the second antenna beams to a predetermined range.

7. The base station of a mobile communication system according to claim 2, wherein the directivity control unit controls transmission of both the first and the second antenna beams not to be simultaneously transmitted in a predetermined time.

8. The base station of a mobile communication system according to claim 1, wherein a rotation time or a rotation repeating time of each of the first and the second antenna beams is set shorter than a phasing period.

9. The base station of a mobile communication system according to claim 2, wherein any one of a base station identification code (CDMA), a frequency combination (OFDM), and a color code transmitted at specific timing (TDMA) is used as the first and the second codes.

10. A mobile station of a mobile communication system in which predetermined communication is performed between the mobile station and the base station, the mobile station of a mobile communication system comprising a direction detecting unit that detects a base station direction based on a first antenna beam encoded and identified by a first code transmitted from the base station and a second antenna beam encoded and identified by a second code different from the first code.

11. The mobile station of a mobile communication system according to claim 10, wherein the direction detecting unit detects the base station direction based on a time difference between reception times when the first and the second antenna beams are received, respectively.

12. The mobile station of a mobile communication system according to claim 11, wherein the first antenna beam is controlled to rotate clockwise and the second antenna beam is controlled to rotate counterclockwise.

13. The mobile station of a mobile communication system according to claim 12, further comprising a delay-profile storing unit that creates, based on a reception signal of each of the first and the second antenna beams, a delay profile for each of the antenna beams and stores the delay profile, wherein
the direction detecting unit detects a base station direction based on time difference information of respective peak values obtained by comparison of delay profiles stored in the delay-profile storing unit.

14. The mobile station of a mobile communication system according to claim 12, further comprising a delay-profile storing unit that creates, based on a reception signal of each of the first and the second antenna beams, a delay profile for each of the antenna beams and stores the delay profile, wherein
the direction detecting unit detects a base station direction based on time difference information between portions with high correlation values on the delay profile.

15. The mobile station of a mobile communication system according to claim 13, wherein the direction detecting unit estimates, when a plurality of peak values are obtained based on the first and the second antenna beams, two imaginary positions based on respective imaginary directions calculated based on two peak positions of highest levels selected out of the peak values as a position of the mobile station and respective distances the mobile station and the base station calculated according to a round-trip propagation time required for communication between the mobile station and the base station and estimates a substantial center of the two imaginary positions as a position of the mobile station.

16. The mobile station of a mobile communication system according to claim 15, wherein the position of the mobile station is estimated based on a signal to interference ratio or a power ratio of reception signal intensity.

17. The mobile station of a mobile communication system according to claim 15, wherein the imaginary positions are estimated further using information on imaginary directions and distances calculated between the mobile station and other base stations different from the base station.

18. An direction detecting method applied to a mobile communication system that has a base station and a mobile station, wherein
the base station has a transmitting step of transmitting a first antenna beam, which rotates clockwise, encoded and identified by a first code and a second antenna beam, which rotates counterclockwise, encoded and identified by a second code different from the first code, respectively, and
the mobile station has a direction detecting step of detecting the base station direction based on a time difference between reception times of the first and the second antenna beams.
